# EUROPÄISCHE PATENTSCHRIFT

(11) **EP 2 805 911 B1**
(45) Veröffentlichungstag und Bekanntmachung des Hinweises auf die Patenterteilung: **06.04.2016**
(21) Anmeldenummer: 14169398.6
(22) Anmeldetag: 22.05.2014
(51) Int. Cl.: B66F 9/075, B62D 61/12, B62D 33/063

(54) **Flurförderzeug, insbesondere Kommissionierflurförderzeug mit einem anhebbaren und absenkbaren Fahrerstand**
Industrial truck, in particular picking truck with a driver's cab that can be raised and lowered
Chariot de manutention, notamment chariot de préparation, avec poste de conduite relevable et abaissable

(30) Priorität: 23.05.2013 DE 102013105299
(43) Veröffentlichungstag der Anmeldung: 26.11.2014
(73) Patentinhaber: KION Warehouse Systems GmbH, 72760 Reutlingen (DE)
(72) Erfinder: Vohrer, Matthias, 72762 Reutlingen (DE); Sawodny, Oliver, 70186 Stuttgart (DE); Wörner, Mark, 70180 Stuttgart (DE)
(74) Vertreter: Geirhos, Johann

(56) Entgegenhaltungen:
- EP-A1- 2 067 738
- EP-A1- 2 511 225
- CH-A5- 594 524
- DE-A1- 1 952 159
- DE-A1-102009 029 467
- DE-C1- 4 303 007
- JP-A- S57 147 971
- US-A1- 2005 045 398

## Beschreibung

Die Erfindung betrifft ein Flurförderzeug, insbesondere Kommissionierflurförderzeug mit einem anhebbaren und absenkbaren Fahrerstand, mit einem an einem Hubgerüst anhebbaren und absenkbaren Lastaufnahmemittel, wobei das Flurförderzeug ein Drei-Rad-Fahrwerk aufweist und mit einem lenkbaren Antriebsrad und zwei nicht-gelenkten Lasträdern auf einer Fahrbahn abgestützt ist, wobei die Lasträdern von dem Antriebsrad in Fahrzeuglängsrichtung beabstandet sind und in Fahrzeugquerrichtung seitlich beabstandet angeordnet sind, wobei das Flurförderzeug mit zwei seitlichen Abstützmitteln versehen ist, die von den Lasträdern in Fahrzeuglängsrichtung beabstandet sind und in Fahrzeugquerrichtung von dem Antriebsrad seitlich beabstandet angeordnet sind, wobei die Abstützmittel jeweils zwischen einer von der Fahrbahn abgehobenen Stellung, in der die Abstützmittel von der Fahrbahn einen Bodenabstand aufweisen, und einer auf die Fahrbahn abgesenkten Stellung, in der die Abstützmittel mit der Fahrbahn in Kontakt stehen, vertikal verstellbar am Flurförderzeug angeordnet sind und zur Verstellung der Abstützmittel zwischen der angehobenen Stellung und der abgesenkten Stellung jeweils ein Stellantrieb vorgesehen ist.

Ein gattungsgemäßes Flurförderzeug ist aus der CH 594 524 A5 bekannt.

Aus der DE 10 2009 029 467 A1 ist ein als Gabelstapler ausgebildetes Flurförderzeug mit einer höhenverstellbaren Hubvorrichtung bekannt, bei dem eine an der Hubeinrichtung angeordnete und gemeinsam mit der Hubeinrichtung in der Höhe verstellbare Beschleunigungssensorik vorgesehen ist, die das Messen von Beschleunigungen in zumindest einer Bewegungsrichtung ermöglicht. Die Beschleunigungssensorik steht mit einem Regel- bzw. Steuergerät des Flurförderzeugs in Verbindung, welches auf der Grundlage der gemessenen Beschleunigungen den aktuellen Fahrzustand des Flurförderzeugs beeinflusst, indem der Antriebsmotor des Flurförderzeugs und/oder die Bremseinrichtung des Flurförderzeugs und/oder die Lenkeinrichtung des Flurförderzeugs und/oder die Hubhöhe der Hubeinrichtung und/oder der Neigewinkel des Mastes beeinflusst werden.

Kommissionierflurförderzeuge, beispielsweise Hochregal-Kommissionierstapler oder Hochregalkommissionierer bzw. Vertikalkommissionierer, weisen einen als Fahrkorb oder Fahrerkabine für eine Bedienperson ausgebildeten, anhebbaren und absenkbaren Fahrerstand auf. An dem Fahrerstand ist hierbei ein Lastaufnahmemittel angeordnet, das beispielsweise von einer in Fahrzeuglängsrichtung angeordneten und von Gabelzinken gebildeten Lastgabel, oder einer Schwenkschubgabel bzw. einer in Fahrzeugquerrichtung angeordneten Teleskopgabel ausgeführt sein kann. Derartige Kommissionierflurförderzeuge werden in Regalanlagen für einen Kommissionierbetrieb und Kommissionierarbeiten von Waren aus höheren Regalebenen eingesetzt. Zudem werden derartige Kommissionierflurförderzeuge in Regalanlagen für das Ein- und Auslagern von Paletten eingesetzt. Der Fahrerstand kann mit einer Standplattform für eine stehende Bedienperson versehen sein oder mit einem Fahrersitz, beispielsweise einem Klappsitz, um eine Bedienung durch eine sitzende Bedienperson oder einer wahlweise Bedienung im Sitzen oder Stehen zu ermöglichen. Das Kommissionierflurförderzeug bewegt sich im Betrieb längs einer Regalzeile in einer entsprechenden Regalgasse einer Regalanlage. Im Kommissionierbetrieb greift hierbei die auf dem Fahrerstand befindliche Bedienperson seitlich in das Regal, um Ware aus dem Regal aufzunehmen und auf dem Lastaufnahmemittel abzulegen, beispielsweise in einen auf dem Lastaufnahmemittel angeordneten Kommissionierbehälter. Zum Einstapeln einer Palette wird mittels der Schwenkschubgabel bzw. der Teleskopgabel eine Palette in Fahrzeugquerrichtung und somit seitlich in ein Regalfach des Regals eingeschoben. Das Ausstapeln einer Palette erfolgt entsprechend, indem mittels der Schwenkschubgabel bzw. der Teleskopgabel eine Palette in Fahrzeugquerrichtung und somit seitlich aus dem Regalfach des Regals herausgezogen wird. Derartige Hochregal-Kommissionierstapler oder Hochregalkommissionierer bzw. Vertikalkommissionierer werden mit Hubgerüsten eingesetzt, die im vollständig nach oben ausgefahrenen Zustand eine Höhe von mehr als 15 Metern aufweisen.

Derartige Kommissionierflurförderzeuge weisen ein Drei-Rad-Fahrwerk auf und sind mit einem lenkbaren und durch einen Fahrantrieb angetriebene Antriebsrad und zwei nicht angetriebenen und nicht-gelenkten Lasträdern auf der Fahrbahn abgestützt. Das lenkbare Antriebsrad ist hierbei in der Regel antriebteilseitig angeordnet und in Fahrzeugquerrichtung gesehen mittig angeordnet. Die beiden Lasträder sind hierbei lastteilseitig im Bereich des Hubgerüstes und des Lastaufnahmemittels angeordnet und von dem mittigen Antriebsrad jeweils zu einer Fahrzeugseite in Fahrzeugquerrichtung beabstandet angeordnet. Mit dem Antriebsrad und den beiden Lasträdern ergibt sich somit eine Dreipunkt-Abstützung mit einem Aufstandsdreieck des Kommissionierflurförderzeugs auf einer Fahrbahn, die von dem Boden einer Lagerhalle gebildet ist. Ein derartiges Kommissionierflurförderzeug ist aus der EP 2 511 225 A1 bekannt.

Die Ausführung des Fahrwerks derartiger Kommissionierflurförderzeuge als Drei-Rad-Fahrwerk mit einem mittig angeordneten lenkbaren Antriebsrad ermöglicht eine kostengünstige Bauart, da im Vergleich zu einem Vier-Rad-Fahrwerk mit einem zur Fahrzeugsaußenseite versetzt angeordneten lenkbaren Antriebsrad und einer von dem Antriebsrad seitlich beabstandete Stützrolle an der gegenüberliegenden Fahrzeugseite bzw. mit zwei lenkbaren Antriebsrädern, die seitlich beanstandet sind, auf einen Spurwinkeldifferenzausgleich bei einer Kurvenfahrt und auf eine Differenzialkoppelung bei Beschleunigungen und Verzögerungen am Fahrbetrieb verzichtet werden kann.

Gegenüber einem Kommissionierflurförderzeug mit einem Vier-Rad-Fahrwerk weist jedoch ein Kommissionierflurförderzeug mit einem ein Drei-Rad-Fahrwerk - statisch betrachtet - eine verschlechterte seitliche Standsicherheit auf. Aus dynamischer Sicht kann sich bei einem Kommissionierflurförderzeug mit einem Drei-Rad-Fahrwerk das Kommissionierflurförderzeug durch seitliche Schwingungen über das mittig angeordnete Antriebsrad aufschwingen. Während einer Fahrt des Kommissionierflurförderzeugs mit einem ausgefahrenen Hubgerüst und somit einem angehobenen Fahrerstand verstärken sich die seitlichen Schwingungen nach oben bis zum angehobenen Fahrerstand, insbesondere bei Hubgerüsten mit großen Hubhöhen. Von der in dem angehobenen Fahrerstand befindlichen Bedienperson des Kommissionierflurförderzeugs werden diese seitlichen Schwingungen als unangenehm und störend empfunden.

Der vorliegenden Erfindung liegt die Aufgabe zugrunde, ein Flurförderzeug der eingangs genannten Gattung zur Verfügung zu stellen, das die genannten Nachteile nicht aufweist.

Diese Aufgabe wird erfindungsgemäß dadurch gelöst, dass das Flurförderzeug mit einem dem Hubgerüst zugeordneten Beschleunigungssensor versehen ist, der in Fahrzeugquerrichtung gerichtete seitliche Beschleunigungen erfasst und die Abstützmittel in Abhängigkeit von den mittels des Beschleunigungssensors erfassten seitlichen Beschleunigung mittels der Stellantriebe von der abgehobenen Stellung in die abgesenkte Stellung betätigt werden. Mit den zusätzlichen beiden Abstützmitteln, die in der angehobenen Stellung von der Fahrbahn aufgehoben sind und in der abgesenkten Stellung mit der Fahrbahn in Kontakt stehen, kann somit das Flurförderzeug durch Absenken der beiden Abstützmittel und somit in Eingriff bringen der Abstützmittel mit der Fahrbahn das Fahrwerk des erfindungsgemäßen Flurförderzeugs bei Bedarf zeitweise von einem Drei-Rad-Fahrwerk in ein Fünf-Rad-Fahrwerk geändert werden. In der abgesenkten Stellung der beiden in Fahrzeugquerrichtung seitlich beabstandete Abstützmittel weist das erfindungsgemäße Flurförderzeug eine verbesserte seitliche, statische Stabilität auf, die bei einem Kommissionierflurförderzeuge durch einen schnelleren Ein- und Ausstapelvorgang einer Palette in bzw. aus einem Regalfach eines Regals zu einer erhöhten Umschlagsleistung führt. Weiterhin wird mit den erfindungsgemäßen Abstützmitteln, die in Abhängigkeit von den seitlichen Querbeschleunigungen in die abgesenkte Stellung betätigt und somit aktiviert werden, eine verbesserte seitliche, dynamische Stabilität des erfindungsgemäßen Flurförderzeugs erzielt, da seitliche dynamische Schwingungen im Hubgerüst bei gleichzeitigen Hubbewegungen des Hubmastes und Fahrbewegungen des Flurförderzeugs reduziert oder gänzlich vermieden werden können. Somit können in der abgesenkten Stellung der Abstützmittel die auf die in den angehobenen Fahrerstand befindliche Bedienperson einwirkenden seitlichen dynamischen Schwingungen bei Hub- und Fahrbewegungen reduziert werden.

Gemäß einer vorteilhaften Weiterbildung der Erfindung ist eine elektronische Steuereinrichtung vorgesehen, die mit dem Beschleunigungssensor und den Stellantrieben in Wirkverbindung steht, und die bei Überschreiten eines Grenzwertes der mittels des Beschleunigungssensors erfassten seitlichen Beschleunigung durch Ansteuerung der Stellantriebe die Abstützmittel in die abgesenkte Stellung betätigt. Die Abstützmittel befinden sich somit unterhalb des Grenzwertes der seitlichen Querbeschleunigungen in der von der Fahrbahn abgehobenen Stellung und werden bei Überschreiten eines Grenzwertes der seitlichen Querbeschleunigungen temporär und zeitlich begrenzt in die abgesenkte Stellung betätigt, um das Fahrwerk von einem Drei-Rad-Fahrwerk in ein Fünf-Rad-Fahrwerk zu wandeln.

Mit besonderem Vorteil sind die Abstützmittel in Fahrzeuglängsrichtung auf Höhe des Antriebsrades an den Fahrzeugaußenseiten angeordnet. Hierdurch ergibt sich bei abgesenkten Abstützmitteln ein von den beiden Abstützmitteln und den beiden Lasträdern gebildetes Aufstandsviereck, das zu eine hoher seitlichen Stabilität des erfindungsgemäßen Flurförderzeugs in der abgesenkten Stellung der Abstützmittel führt.

Gemäß einer vorteilhaften Ausgestaltungsform der Erfindung ist der anhebbare und absenkbare Fahrerstand mit dem Beschleunigungssensor versehen. Hierdurch werden unmittelbar die auf die in dem Fahrerstand befindliche Bedienperson einwirkenden seitlichen Schwingungen von dem Beschleunigungssensor erfasst.

Hinsichtlich eines einfachen Aufbaus ergeben sich Vorteile, wenn gemäß einer bevorzugten Ausführungsform der Erfindung die Abstützmittel an einem Fahrzeugrahmen des Flurförderzeugs vertikal verstellbar angeordnet sind. Derartige vertikal verstellbare Abstützmittel können auf einfache Weise zwischen der angehobenen Stellung und der abgesenkten Stellung betätigt und verstellt werden.

Vorteilhafterweise sind hierzu die Abstützmittel mittels einer Linearführung an dem Fahrzeugrahmen vertikal verstellbar geführt. Mit derartigen, als Vertikalführungen ausgebildeten Linearführungen können die beiden seitlichen Abstützmittel mit geringem Bauaufwand zwischen der angehobenen Stellung der abgesenkten Stellung verstellt werden. Zudem können über derartige Linearführungen hohe Kräfte übertragen werden, so dass auch bei hohen Hubhöhen des erfindungsgemäßen Flurförderzeugs die seitliche Stabilität mit geringem Bauaufwand erhöht werden kann.

Die vertikale Linearführung weißt gemäß einer vorteilhaften Ausgestaltungsform der Erfindung eine an dem Fahrzeugrahmen angeordnete Führungsnut auf, in der das Abstützmittel verstellbar geführt ist. Eine derartige vertikale Führungsnut kann an dem Fahrzeugrahmen auf einfache Weise mit geringem Herstellungsaufwand geschaffen werden.

Gemäß einer vorteilhaften Weiterbildung der Erfindung sind die Abstützmittel jeweils von einer nicht-lenkbaren Stützrolle gebildet, die um eine in Fahrzeugquerrichtung angeordnete horizontale Drehachse an einem zwischen der angehobenen Stellung und der abgesenkten Stellung verstellbaren Radträger drehbar angeordnet sind. Derartige als nicht-lenkbare Stützrollen ausgebildete Abstützmittel können ebenfalls während einer Fahrbewegung des erfindungsgemäßen Flurförderzeugs, wobei das Flurförderzeug im Wesentlichen geradlinig in einer Regalgasse des Regals fährt, in die abgesenkte Stellung betätigt werden, um die seitlichen dynamischen Schwingungen während einer Fahrbewegung des Flurförderzeugs zu reduzieren bzw. zu vermeiden und dadurch eine erhöhte seitliche, dynamische Stabilität des erfindungsgemäßen Flurförderzeugs zu erzielen.

Zweckmäßigerweise ist der Stellantrieb an einem Fahrzeugrahmen des Flurförderzeugs befestigt und steht mit dem Abstützmittel zu dessen Betätigung zwischen der angehobenen Stellung und der abgesenkten Stellung in Wirkverbindung. Mit Stellantrieben, die an dem Fahrzeugrahmen abgestützt sind, können die in vertikaler Richtung verstellbaren Abstützmittel mit geringem Bauaufwand zwischen der angehobenen Stellung oder abgesenkten Stellung betätigt werden.

Als Stellantriebe können entsprechende Linearantriebe verwendet werden. Gemäß einer bevorzugten Ausführungsform der Erfindung ist der Stellantrieb von einem Hydraulikzylinder, insbesondere einem doppelt wirkenden Hydraulikzylinder, gebildet. Sofern die Hydraulikzylinder von einer bereits vorhandenen Arbeitshydraulik des Flurförderzeugs mit Druckmittel versorgt werden, kann ein kostengünstiger Stellantrieb zum Betätigen des entsprechenden Abstützmittels zwischen der angebotenen Stellung der gesenkten Stellung erzielt werden. Durch ein von der elektronischen Steuereinrichtung ansteuerbares Steuerventils können die Hydraulikzylinder auf einfache Weise betätigt werden, um die Abstützmittel von der Fahrbahn abzuheben bzw. auf die Fahrbahn abzusenken.

Besondere Vorteile ergeben sich, wenn gemäß einer Ausführungsform der Erfindung das Hubgerüst als mehrschüssiges Hubgerüst mit einem an dem Fahrzeugrahmen angeordneten Standmast und einem oder mehreren nach oben ausfahrbaren Ausfahrmasten ausgebildet ist. Bei einem Flurförderzeug mit einem derartigen mehrschüssigen Hubgerüst kann mit den erfindungsgemäßen Abstützmittel mit geringem Zusatzaufwand die seitliche, statische Stabilität und die seitliche, dynamische Stabilität erhöht werden.

Besondere Vorteile ergeben sich, wenn gemäß einer Ausführungsform der Erfindung, der Fahrerstand an dem Hubgerüst anhebbar und absenkbar angeordnet ist. Mit den erfindungsgemäßen Abstützmitteln, die in Abhängigkeit von einem in dem Fahrerstand angeordneten Beschleunigungssensor, der die seitlichen Beschleunigungen erfasst, aktiviert und in die abgesenkte Stellung betätigt werden, kann die seitliche Stabilität des Flurförderzeugs wirkungsvoll erhöht und die auf die in dem Fahrerstand befindliche Bedienpersonen einwirkenden seitlichen Schwingungen wirkungsvoll verringert werden.

Sofern gemäß einer vorteilhaften Ausführungsform der Erfindung an dem Fahrerstand das Lastaufnahmemittel angeordnet ist, das von einer in Fahrzeuglängsrichtung angeordneten Lastgabel oder einer Schwenkschubgabel oder einer in Fahrzeugquerrichtung angeordneten Teleskopgabel gebildet ist, kann durch das Absenken der erfindungsgemäßen Abstützmittel die seitliche statische Stabilität des Flurförderzeugs erhöht werden und der Kommissionierbetrieb sowie ein Ein- bzw. Ausstapelvorgang einer Palette beschleunigt werden und somit die Umschlagsleistung des erfindungsgemäßen Flurförderzeugs erhöht werden.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Flurförderzeug in einer Seitenansicht,
- Figur 2: das Flurförderzeug der Figur 1 in einer perspektivischen Darstellung mit nach oben ausgefahrenem Hubgerüst,
- Figur 3: einen Ausschnitt der Figur 2 in einer vergrößerten Darstellung und
- Figur 4: einen Ausschnitt der Figur 3 in einer vergrößerten Darstellung.

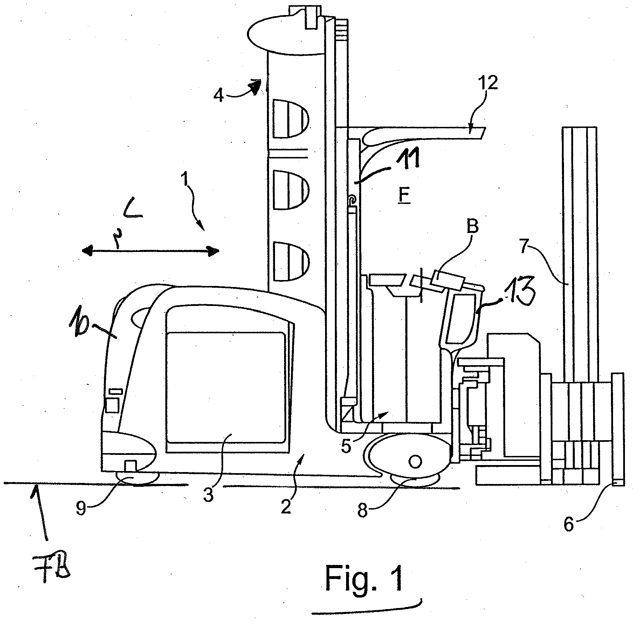

In der Figur 1 ist ein erfindungsgemäßes, als Hochregal-Kommissionierstapler ausgebildetes Kommissionierflurförderzeugs 1 dargestellt.

Das Kommissionierflurförderzeug 1 weist einen Fahrzeugkörper mit einem Fahrzeugrahmen 2 auf, in dem ein Batteriefach zur Aufnahme einer beispielsweise als Antriebsbatterie ausgebildeten Energieversorgungseinheit 3 eines batterie-elektrischen Antriebssystems des Flurförderzeugs ausgebildet ist. Das Kommissionierflurförderzeug 1 weist ein von einem Hubgerüst 4 gebildetes Hubwerk auf, an dem ein als Fahrkorb bzw. Fahrerkabine ausgebildeter Fahrerstand 5, der einen Fahrerarbeitsplatz F für eine Bedienperson bildet, mittels eines nicht näher dargestellten Hubantriebs auf- und abbewegbar angeordnet ist. An dem anhebbaren und absenkbaren Fahrerstand 5 ist bei dem dargestellten Kommissionierflurförderzeug 1 ein Lastaufnahmemittel 6 angeordnet, das beispielsweise als Schwenkschubgabel ausgebildet ist, die an einen am Fahrerstand 5 angeordneten Zusatzhubmast 7 anhebbar und absenkbar angeordnet ist. Alternativ kann das Lastaufnahmemittel von einer in Fahrzeugquerrichtung verschiebbar angeordneten Teleskopgabel gebildet werden, die an dem Fahrerstand 5 angeordnet ist.

In dem Fahrerstand 5 sind die für die Bedienung des Kommissionierflurförderzeugs 1 erforderlichen Steuer- und Bedienelemente angeordnet, beispielsweise in Form einer als Bedienpult B ausgebildeten Bedieneinrichtung. Das Bedienpult B ist zur Steuerung zur Steuerung des Fahrantriebs und der Lasthandhabungsfunktionen des Kommissionierflurförderzeugs 1 mit entsprechende Bedienelementen sowie einem Lenkbetätigungselement zur Steuerung der Lenkung versehen.

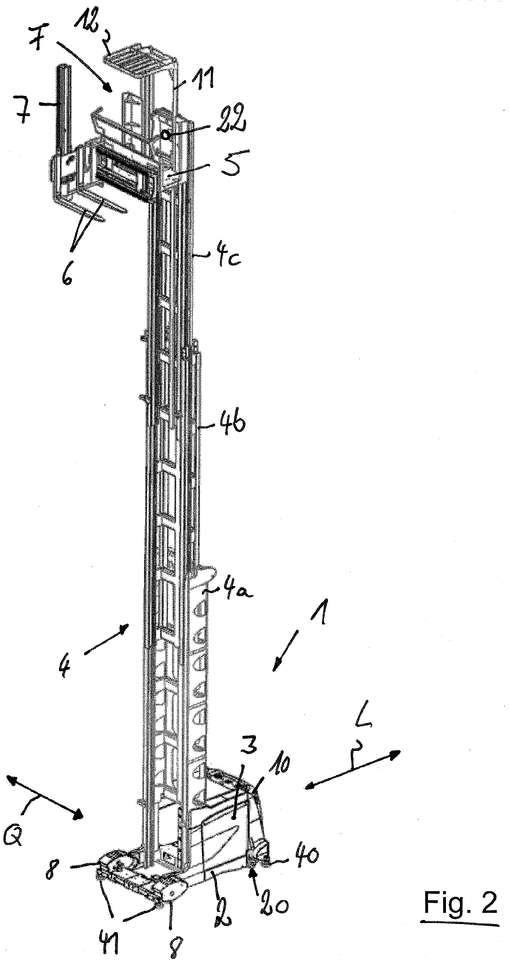

Das Kommissionierflurförderzeug 1 weist ein Drei-Rad-Fahrwerk auf stützt sich mittels zwei nicht-gelenkten und nicht angetriebenen Lasträdern 8, die an einem lastteilseitigen Ende des Fahrzeugrahmens 2 angeordnet ist, und einem lenkbaren Antriebsrad 9, das an einem antriebsteilseitigen Ende des Fahrzeugrahmens 2 angeordnet ist, auf einer Fahrbahn FB ab. Die Lasträder 8 sind somit in Fahrzeuglängsrichtung L von dem Antriebsrad 9 beabstandet. Das Antriebsrad 9 ist hierbei in Fahrzeugquerrichtung Q gesehen mittig angeordnet. Die beiden Lasträder 8 sind jeweils von dem mittig angeordneten Antriebsrad 9 - wie in Verbindung mit der Figur 2 ersichtlich ist - in Fahrzeugquerrichtung Q beabstandet und befinden sich an den entsprechenden Fahrzeugaußenseiten.

Im antriebsteilseitigen Ende des Rahmens 2 ist weiterhin ein nicht näher dargestelltes elektrisches Antriebssystem angeordnet, das einen elektrischen Fahrmotor und einen Lenkantrieb, beispielsweise einen elektrischen Lenkmotor, für das lenkbare Antriebsrad 9 sowie ein elektrisch betriebenes Hydraulikpumpenaggregat umfasst, das zur Versorgung der Arbeitshydraulik vorgesehen ist, die von dem Hubantrieb des Hubwerkes 4 sowie einem Hubantrieb des Zusatzhubmastes 7 sowie Antrieben für die im dargestellten Ausführungsbeispiel vorgesehene Schwenkschubgabel als Lastaufnahmemittel 6 gebildet sind.

Das Antriebsteil des Flurförderzeugs 1 befindet sich in Fahrzeugslängsrichtung vor dem Batteriefach. Das Antriebsteil ist von einer Haube 10 abgedeckt. Das Laststeil des Flurförderzeugs 1 befindet sich in Fahrzeuglängsrichtung hinter dem Batteriefach und umfasst das Lastaufnahmemittel 6.

Das Hubgerüst 4 des erfindungsgemäßen Flurförderzeugs 1 ist als mehrschüssiges Hubgerüst ausgebildet. Im dargestellten Ausführungsbeispiel und gemäß der Figur 2 ist das Hubgerüst 4 als sogenanntes Triplex-Hubgerüst ausgeführt mit einem an dem Fahrzeugrahmen 2 angeordneten Standmast 4a, einem in dem Standmast 4a nach oben ausfahrbaren ersten Ausfahrmast 4a und einem in ersten Ausfahrmast 4a nach oben ausfahrbaren zweiten Ausfahrmast 4b, in dem der Fahrerstand 5 nach oben ausfahrbar angeordnet ist. In der Figur 2 ist das Flurförderzeug 1 mit vollständig nach oben ausgezogenem Hubgerüst 4 und vollständig angehobenem Fahrerstand 5 dargestellt.

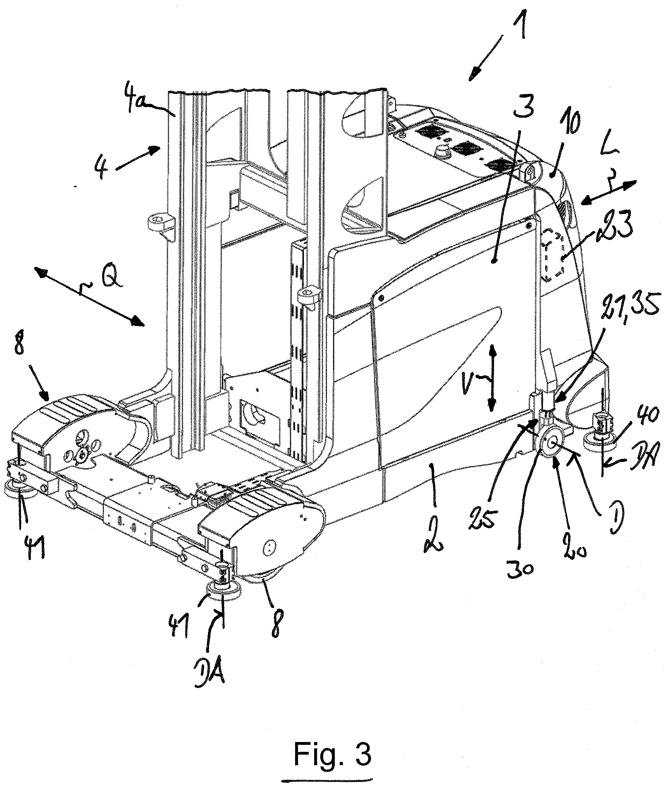

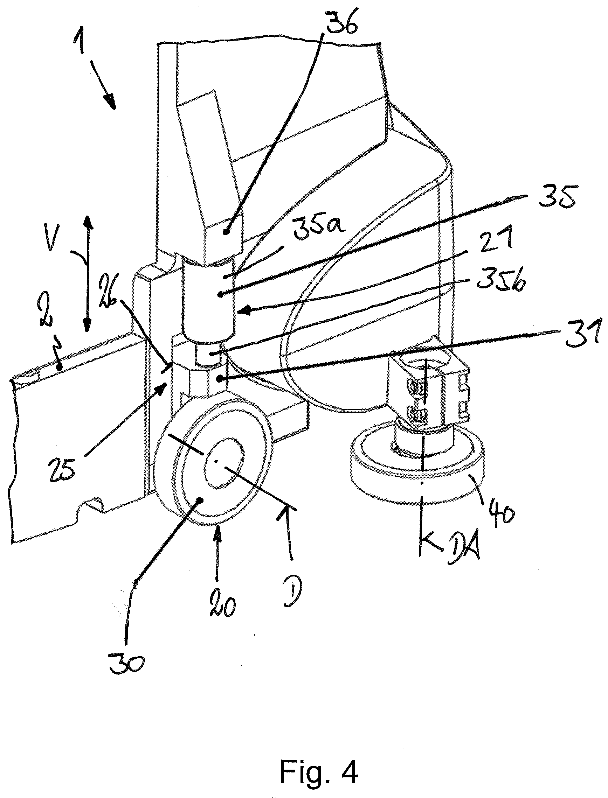

Erfindungsgemäß ist das Flurförderzeug 1 - wie in Verbindung mit den Figuren 2 bis 4 näher dargestellt ist - mit zwei seitlichen Abstützmitteln 20 versehen, die von den Lasträdern 8 in Fahrzeuglängsrichtung L beabstandet sind und in Fahrzeugquerrichtung Q von dem Antriebsrad 9 seitlich beabstandet angeordnet sind. In den Figuren 2 bis 4 ist das auf einer Fahrzeugaußenseite angeordnete Abstützmittel 20 dargestellt, an dem der Aufbau weiter beschrieben wird. An der gegenüberliegenden Fahrzeugaußenseite ist ein dem dargestellten Abstützmittel 20 analoges Abstützmittel 20 angeordnet.

Die Abstützmittel 20 sind in dem antriebsteilseitigen Ende des Fahrzeugrahmens 2 angeordnet und befinden sich somit in Fahrzeuglängsrichtung L auf Höhe des Antriebsrades 9 an den entsprechenden Fahrzeugaußenseiten.

Die Abstützmittel 20 sind jeweils zwischen einer von der Fahrbahn FB abgehobenen Stellung, in der die Abstützmittel 20 von der Fahrbahn FB abgehoben sind und einen Bodenabstand aufweisen, und einer auf die Fahrbahn FB abgesenkten Stellung, in der die Abstützmittel 20 auf die Fahrbahn FB abgesenkt sind und mit der Fahrbahn FB in Kontakt stehen, vertikal verstellbar am Flurförderzeug 1 angeordnet.

Zur Verstellung der Abstützmittel 20 zwischen der angehobenen Stellung und der abgesenkten Stellung ist jeweils ein Stellantrieb 21 vorgesehen. Der Stellantrieb 21 ist an dem Fahrzeugrahmen 2 des Flurförderzeugs 1 befestigt und abgestützt und steht mit dem Abstützmittel 20 zu dessen Betätigung zwischen der angehobenen Stellung und der abgesenkten Stellung in Wirkverbindung.

Das Flurförderzeug 1 ist weiterhin mit einem dem Hubgerüst 4 zugeordneten Beschleunigungssensor 22 versehen, der in Fahrzeugquerrichtung Q gerichtete seitliche Beschleunigungen erfasst. Die Abstützmittel 20 werden in Abhängigkeit der von dem Beschleunigungssensor 22 erfassten seitlichen Beschleunigung mittels der Stellantriebe 21 von der abgehobenen Stellung in die abgesenkte Stellung betätigt.

Der Beschleunigungssensor 22 ist in dem anhebbaren und absenkbaren Fahrerstand 5 angeordnet.

Zur Ansteuerung der Stellantriebe 21 ist eine elektronische Steuereinrichtung 23 vorgesehen, die mit dem Beschleunigungssensor 22 und den Stellantrieben 21 in Wirkverbindung steht. Die elektronische Steuereinrichtung 23 ist hierbei derart ausgeführt, dass bei Überschreiten eines Grenzwertes der mittels des Beschleunigungssensors 22 erfassten seitlichen Beschleunigung die Stellantriebe 21 derart angesteuert werden, dass die Abstützmittel 20 in die abgesenkte Stellung betätigt werden. Ist die von dem Beschleunigungssensor 22 erfasst werden seitliche Beschleunigung unterhalb des Grenzwertes werden von der elektronischen Steuereinrichtung 23 die Stellantriebe 21 derart angesteuert, dass die Abstützmittel 20 in die angehobene Stellung betätigt werden.

Die Abstützmittel 20 sind jeweils an dem Fahrzeugrahmen 2 des Flurförderzeugs 1 in vertikaler Richtung V verstellbar zwischen der angehobenen Stellung und der abgesenkten Stellung angeordnet. Die Abstützmittel 20 sind hierzu jeweils mittels einer als Vertikalführung ausgebildete Linearführung 25 an dem Fahrzeugrahmen 2 vertikal verstellbar geführt. Die vertikale Linearführung 25 weist eine an dem Fahrzeugrahmen 2 angeordnete vertikale Führungsnut 26 auf, in der das Abstützmittel 20 verstellbar geführt ist. Zwischen der Führungsnut 26 und dem Abstützmittel 20 sind entsprechende Kontaktflächen ausgebildet, um das Abstützmittel 20 in Fahrzeuglängsrichtung L und in Fahrzeuglängsrichtung Q zu haltern.

Die Abstützmittel 20 sind jeweils von einer nicht-lenkbaren Stützrolle 30 gebildet, die um eine in Fahrzeugquerrichtung Q angeordnete horizontale Drehachse D an einem zwischen der angehobenen Stellung und der abgesenkten Stellung verstellbaren Radträger 31 drehbar angeordnet sind. Der Radträger 31 ist hierbei in der vertikalen Führungsnut 26 der Linearführung 25 vertikal beweglich angeordnet.

Der Stellantrieb 21 ist von einem Hydraulikzylinder 35, insbesondere einem doppelt wirkenden Hydraulikzylinder, gebildet. Im dargestellten Ausführungsbeispiel ist der Hydraulikzylinder 35 mit einem Zylindergehäuse 35a an einer Abstützung 36 des Fahrzeugrahmens 2 abgestützt und weist einen nach unten ausfahrenden Kolbenstange 35b auf, die mit dem Abstützmittel 20 in Wirkverbindung steht. Im dargestellten Ausführungsbeispiel steht die Kolbenstange 35b mit dem Radträger 31 in Kontakt und ist mit dem Radträger 31 verbunden. Der Hydraulikzylinder 35 weist einen entsprechenden Hub auf, um das Abstützmittel 20 zwischen der angehobenen Stellung und der abgesenkten Stellung zu betätigen.

Der Hydraulikzylinder 35 steht zur Versorgung mit Druckmittel mit dem Hydraulikpumpenaggregat der Arbeitshydraulik des Flurförderzeugs 1 in Verbindung und ist mittels eines Steuerventils betätigbar, das mit der elektronischen Steuereinrichtung 23 zur Ansteuerung in Verbindung steht.

Das Flurförderzeug 1 ist weiterhin an dem antriebteilseitigen Ende mit seitlichen Führungsrollen 40 sowie an dem lastteilseitigen Ende mit seitlichen Führungsrollen 41 versehen. Die Führungsrolle 40, 41 sind jeweils um eine vertikale Drehachse DA an dem Fahrzeugrahmen 2 drehbar angeordnet. Die Führungsrolle 40, 41 ermöglichen in Verbindung mit Führungsschienen in einer Regalgasse eines Regals eine Führung des Flurförderzeugs 1 bei einer Fahrbewegung in der Regalgasse des Regals.

Das erfindungsgemäße Flurförderzeugs 1 weist durch die mittels der Stellantriebe 21 vertikal verstellbaren Abstützmittel 20 zusätzliche mit der Fahrbahn FB in Eingriff zu bringende seitliche Stützrollen 30 auf, um bei dem Flurförderzeug 1 das von den beiden Lasträdern 8 und dem Antriebsrad 9 bestehende dreirädrige Fahrwerk bei Bedarf zweitweise in ein fünfrädriges Fahrwerk zu ändern.

Die Aktivierung der zusätzlichen vertikal verstellbaren Abstützmittel 20 erfolgt durch den in dem Fahrerstand 5 angebauten Beschleunigungssensor 22, der bei entsprechenden auftretenden seitlichen Beschleunigungen Signale an die elektronische Steuereinrichtung 23 sendet, die die Stellantriebe 21 aktiviert, um die Abstützmittel 20 zwischen der angehobenen Stellung und der abgesenkten Stellung zu verstellen.

Das erfindungsgemäße Flurförderzeug weist durch Absenken der Abstützmittel eine erhöhte seitliche statische Stabilität, die bei Ein- und Ausstapelvorgängen einer Palette in bzw. aus einem Regalfach eines Regals von Vorteil ist. Bei Ein- und Ausstapelvorgängen einer Palette in bzw. aus einem Regalfach eines Regals, wobei das Lastaufnahmemittel 6 in Fahrzeugquerrichtung Q bewegt wird, um eine Palette in einen Regalfach des Regals einzustapeln bzw. aus dem Regalplatz eines Regals auszustapeln, kann durch Absenken der Abstützmittel 20 der Ein- bzw. Ausstapelvorgängen beschleunigt werden, wodurch das erfindungsgemäße Flurförderzeug 1 eine erhöhte Umschlagsleitung aufweist.

Durch Deaktivierung der von den Stützrollen 30 gebildeten Abstützmittel 20 in Abhängigkeit von den mittels des Beschleunigungssensors 22 erfassten seitlichen Beschleunigungen des Hubgerüstes 4 bzw. des Fahrerstandes 5 kann zudem bei dem erfindungsgemäßen Flurförderzeugs 1 ein Aufschwingen des Fahrwerks über das Antriebsrad 9 vermieden werden und somit eine verbesserte seitliche dynamische Stabilität erzielt werden. Die seitlichen dynamische Schwingungen im Hubgerüst 4 sowie in dem Fahrerstand 5 bei gleichzeitiger Hub- und Fahrbewegung können bei abgesenkten Abstützmitteln 20 reduziert bzw. vollständig vermieden werden.

## Patentansprüche

1. Flurförderzeug (1), insbesondere Kommissionierflurförderzeug mit einem anhebbaren und absenkbaren Fahrerstand (5), mit einem an einem Hubgerüst (4) anhebbaren und absenkbaren Lastaufnahmemittel (6), wobei das Flurförderzeug (1) ein Drei-Rad-Fahrwerk aufweist und mit einem lenkbaren Antriebsrad (9) und zwei nicht-gelenkten Lasträdern (8) auf einer Fahrbahn (FB) abgestützt ist, wobei die Lasträdern (8) von dem Antriebsrad (9) in Fahrzeuglängsrichtung (L) beabstandet sind und in Fahrzeugquerrichtung (Q) seitlich beabstandet angeordnet sind, wobei das Flurförderzeug (1) mit zwei seitlichen Abstützmitteln (20) versehen ist, die von den Lasträdern (8) in Fahrzeuglängsrichtung (L) beabstandet sind und in Fahrzeugquerrichtung (Q) von dem Antriebsrad (9) seitlich beabstandet angeordnet sind, wobei die Abstützmittel (20) jeweils zwischen einer von der Fahrbahn abgehobenen Stellung, in der die Abstützmittel (20) von der Fahrbahn (FB) einen Bodenabstand aufweisen, und einer auf die Fahrbahn (FB) abgesenkten Stellung, in der die Abstützmittel (20) mit der Fahrbahn (FB) in Kontakt stehen, vertikal verstellbar am Flurförderzeug (1) angeordnet sind und zur Verstellung der Abstützmittel (20) zwischen der angehobenen Stellung und der abgesenkten Stellung jeweils ein Stellantrieb (21) vorgesehen ist, **dadurch gekennzeichnet, dass** das Flurförderzeug (1) mit einem dem Hubgerüst (4) zugeordneten Beschleunigungssensor (22) versehen ist, der in Fahrzeugquerrichtung (Q) gerichtete seitliche Beschleunigungen erfasst und die Abstützmittel (20) in Abhängigkeit von den mittels des Beschleunigungssensors (22) erfassten seitlichen Beschleunigungen mittels der Stellantriebe (21) von der abgehobenen Stellung in die abgesenkte Stellung betätigt werden.

2. Flurförderzeug nach Anspruch 1, **dadurch gekennzeichnet, dass** eine elektronische Steuereinrichtung (23) vorgesehen ist, die mit dem Beschleunigungssensor (22) und den Stellantrieben (21) in Wirkverbindung steht, und die elektronische Steuereinrichtung (23) bei Überschreiten eines Grenzwertes der mittels des Beschleunigungssensors (22) erfassten seitlichen Beschleunigung durch Ansteuerung der Stellantriebe (21) die Abstützmittel (20) in die abgesenkte Stellung betätigt.

3. Flurförderzeug nach Anspruch 1 oder 2, **dadurch gekennzeichnet, dass** die Abstützmittel (20) in Fahrzeuglängsrichtung (L) auf Höhe des Antriebsrades (9) an den Fahrzeugaußenseiten angeordnet sind.

4. Flurförderzeug nach einem der Ansprüche 1 bis 3, **dadurch gekennzeichnet, dass** der anhebbare und absenkbare Fahrerstand (5) mit dem Beschleunigungssensor (22) versehen ist.

5. Flurförderzeug nach einem der Ansprüche 1 bis 4, **dadurch gekennzeichnet, dass** die Abstützmittel (20) an einem Fahrzeugrahmen (2) des Flurförderzeugs (1) vertikal verstellbar angeordnet sind.

6. Flurförderzeug nach einem der Ansprüche 1 bis 5, **dadurch gekennzeichnet, dass** die Abstützmittel (20) mittels einer Linearführung (25) an dem Fahrzeugrahmen (2) vertikal verstellbar geführt sind.

7. Flurförderzeug nach Anspruch 6, **dadurch gekennzeichnet, dass** die vertikale Linearführung (25) eine an dem Fahrzeugrahmen (2) angeordnete Führungsnut (26) aufweist, in der das Abstützmittel (20) verstellbar geführt ist.

8. Flurförderzeug nach einem der Ansprüche 1 bis 7, **dadurch gekennzeichnet, dass** die Abstützmittel (20) jeweils von einer nicht-lenkbaren Stützrolle (30) gebildet sind, die um eine in Fahrzeugquerrichtung (Q) angeordnete horizontale Drehachse (D) an einem zwischen der angehobenen Stellung und der abgesenkten Stellung verstellbaren Radträger (31) drehbar angeordnet sind.

9. Flurförderzeug nach einem der Ansprüche 1 bis 8, **dadurch gekennzeichnet, dass** der Stellantrieb (21) an einem Fahrzeugrahmen (2) des Flurförderzeugs (1) befestigt ist und mit dem Abstützmittel (20) zu dessen Betätigung zwischen der angehobenen Stellung und der abgesenkten Stellung in Wirkverbindung steht.

10. Flurförderzeug nach einem der Ansprüche 1 bis 9, **dadurch gekennzeichnet, dass** der Stellantrieb (21) von einem Hydraulikzylinder (35), insbesondere einem doppelt wirkenden Hydraulikzylinder, gebildet ist.

11. Flurförderzeug nach einem der Ansprüche 1 bis 10, **dadurch gekennzeichnet, dass** das Hubgerüst (4) als mehrschüssiges Hubgerüst (4) mit einem an dem Fahrzeugrahmen (2) angeordneten Standmast (4) und einem oder mehreren nach oben ausfahrbaren Ausfahrmasten (4a; 4b) ausgebildet ist.

12. Flurförderzeug nach einem der Ansprüche 1 bis 11, **dadurch gekennzeichnet, dass** der Fahrerstand (5) an dem Hubgerüst (4) anhebbar und absenkbar angeordnet ist.

13. Flurförderzeug nach einem der Ansprüche 1 bis 12, **dadurch gekennzeichnet, dass** an dem Fahrerstand (5) das Lastaufnahmemittel (6) angeordnet ist, das von einer in Fahrzeuglängsrichtung (L) angeordneten Lastgabel oder einer Schwenkschubgabel oder einer in Fahrzeugquerrichtung (Q) angeordneten Teleskopgabel gebildet ist.

## Claims

1. Industrial truck (1), in particular picking truck with a driver's cab (5) which can be raised and lowered, with a load holding means (6) which can be raised and lowered on a lifting frame (4), wherein the industrial truck (1) has a three-wheel chassis and is supported with a steerable driven wheel (9) and two non-steered load wheels (8) on an underlying surface (FB), wherein the load wheels (8) are spaced apart from the driven wheel (9) in the longitudinal direction (L) of the vehicle and are arranged spaced apart laterally in the transverse direction (Q) of the vehicle, wherein the industrial truck (1) is provided with two lateral supporting means (20) which are spaced apart from the load wheels (8) in the longitudinal direction (L) of the vehicle and are arranged spaced apart laterally from the driven wheel (9) in the transverse direction (Q) of the vehicle, wherein the supporting means (20) are arranged on the industrial truck (1) so as to be vertically adjustable in each case between a position in which they are lifted off from the underlying surface and in which the supporting means (20) have floor clearance from the underlying surface (FB), and a position in which they are lowered onto the underlying surface (FB) and in which the supporting means (20) are in contact with the underlying surface (FB), and in each case an actuator drive (21) is provided for adjusting the supporting means (20) between the raised position and the lowered position, **characterized in that** the industrial truck (1) is provided with an acceleration sensor (22) which is assigned to the lifting frame (4) and which senses lateral accelerations directed in the transverse direction (Q) of the vehicle, and the supporting means (20) are activated from the raised position into the lowered position by means of the actuator drives (21) as a function of the lateral accelerations sensed by means of the acceleration sensor (22).

2. Industrial truck according to Claim 1, **characterized in that** an electronic control device (23) is provided which is operatively connected to the acceleration sensor (22) and to the actuator drives (21), and the electronic control device (23) activates the supporting means (20) into the lowered position by actuating the actuator drives (21) when a limiting value of the lateral acceleration sensed by means of the acceleration sensor (22) is exceeded.

3. Industrial truck according to Claim 1 or 2, **characterized in that** the supporting means (20) are arranged on the outside of the vehicle in the longitudinal direction (L) of the vehicle at the level of the driven wheel (9).

4. Industrial truck according to one of Claims 1 to 3, **characterized in that** the driver's cab (5) which can be raised and lowered is provided with the acceleration sensor (22).

5. Industrial truck according to one of Claims 1 to 4, **characterized in that** the supporting means (20) are arranged so as to be vertically adjustable on a vehicle frame (2) of the industrial truck (1).

6. Industrial truck according to one of Claims 1 to 5, **characterized in that** the supporting means (20) are guided in a vertically adjustable fashion on the vehicle frame (2) by means of a linear guide (25).

7. Industrial truck according to Claim 6, **characterized in that** the vertical linear guide (25) has a guide groove (26) which is arranged on the vehicle frame (2) and in which the supporting means (20) is adjustably guided.

8. Industrial truck according to one of Claims 1 to 7, **characterized in that** the supporting means (20) are each formed by a non-steerable supporting roller (30) which is arranged, so as to be rotatable about a horizontal rotational axis (D) arranged in the transverse direction (Q) of the vehicle, on a wheel carrier (31) which can be adjusted between the raised position and the lowered position.

9. Industrial truck according to one of Claims 1 to 8, **characterized in that** the actuator drive (21) is attached to a vehicle frame (2) of the industrial truck (1) and is operatively connected to the supporting means (20) in order to activate same between the raised position and the lowered position.

10. Industrial truck according to one of Claims 1 to 9, **characterized in that** the actuator drive (21) is formed by a hydraulic cylinder (35), in particular a double-acting hydraulic cylinder.

11. Industrial truck according to one of Claims 1 to 10, **characterized in that** the lifting frame (4) is embodied as a multi-shot lifting frame (4) with a standard mast (4) which is arranged on the vehicle frame (2) and one or more extendible masts (4a; 4b) which can be extended upwards.

12. Industrial truck according to one of Claims 1 to 11, **characterized in that** the driver's cab (5) is arranged so as to be capable of being raised and lowered on the lifting frame (4).

13. Industrial truck according to one of Claims 1 to 12, **characterized in that** the load holding means (6) is arranged on the driver's cab (5), which load holding means (6) is formed by a load fork which is arranged in the longitudinal direction (L) of the vehicle or a swivel reach fork or a telescopic fork which is arranged in the transverse direction (Q) of the vehicle.

## Revendications

1. Chariot de manutention (1), en particulier chariot de préparation des commandes comprenant un poste de conduite (5) relevable et abaissable, comprenant un moyen de réception de charge (6) relevable et abaissable au niveau d'une structure de levage (4), le chariot de manutention (1) présentant un châssis à trois roues et étant supporté sur une voie de circulation (FB) par une roue d'entraînement dirigeable (9) et deux roues de charge non dirigées (8), les roues de charge (8) étant espacées de la roue d'entraînement (9) dans la direction longitudinale du véhicule (L) et étant disposées de manière espacée latéralement dans la direction transversale du véhicule (Q), le chariot de manutention (1) étant pourvu de deux moyens de support latéraux (20) qui sont espacés des roues de charge (8) dans la direction longitudinale du véhicule (L) et qui sont disposés de manière espacée latéralement de la roue d'entraînement (9) dans la direction transversale du véhicule (Q), les moyens de support (20) étant á chaque fois disposés de manière déplaçable verticalement sur le chariot de manutention (1) entre une position relevée depuis la voie de circulation, dans laquelle les moyens de support (20) présentent une distance au sol depuis la voie de circulation (FB) et une position abaissée sur la voie de circulation (FB), dans laquelle les moyens de support (20) sont en contact avec la voie de circulation (FB), et un entraînement de réglage (21) étant à chaque fois prévu pour le déplacement des moyens de support (20) entre la position relevée et la position abaissée, **caractérisé en ce que** le chariot de manutention (1) est pourvu d'un capteur d'accélération (22) associé à la structure de levage (4), lequel détecte des accélérations latérales orientées dans la direction transversale du véhicule (Q) et les moyens de support (20) sont actionnés au moyen des entraînements de réglage (21) de la position relevée dans la position abaissée en fonction des accélérations latérales détectées au moyen du capteur d'accélération (22).

2. Chariot de manutention selon la revendication 1, **caractérisé en ce qu'**un dispositif de commande électronique (23) est prévu, lequel est en liaison fonctionnelle avec le capteur d'accélération (22) et les entraînements de réglage (21), et le dispositif de commande électronique (23), lors du dépassement d'une valeur limite de l'accélération latérale détectée au moyen du capteur d'accélération (22), par commande des entraînements de réglage (21), actionne les moyens de support (20) dans la position abaissée.

3. Chariot de manutention selon la revendication 1 ou 2, **caractérisé en ce que** les moyens de support (20) sont disposés dans la direction longitudinale du véhicule (L) à la hauteur de la roue d'entraînement (9) au niveau des côtés extérieurs du véhicule.

4. Chariot de manutention selon l'une quelconque des revendications 1 à 3, **caractérisé en ce que** le poste de conduite (5) relevable et abaissable est pourvu du capteur d'accélération (22).

5. Chariot de manutention selon l'une quelconque des revendications 1 à 4, **caractérisé en ce que** les moyens de support (20) sont disposés de manière réglable verticalement au niveau d'un châssis de véhicule (2) du chariot de manutention (1).

6. Chariot de manutention selon l'une quelconque des revendications 1 à 5, **caractérisé en ce que** les moyens de support (20) sont guidés de manière réglable verticalement au moyen d'un guide linéaire (25) au niveau du châssis de véhicule (2).

7. Chariot de manutention selon la revendication 6, **caractérisé en ce que** le guide linéaire vertical (25) présente une rainure de guidage (26) disposée au niveau du châssis de véhicule (2), dans laquelle est guidé de manière réglable le moyen de support (20).

8. Chariot de manutention selon l'une quelconque des revendications 1 à 7, **caractérisé en ce que** les moyens de support (20) sont formés à chaque fois par un galet de support non dirigeable (30), les galets de support étant disposés de manière à pouvoir tourner autour d'un axe de rotation horizontal (D) disposé dans la direction transversale du véhicule (Q) au niveau d'un support de roue (31) déplaçable entre la position relevée et la position abaissée.

9. Chariot de manutention selon l'une quelconque des revendications 1 à 8, **caractérisé en ce que** l'entraînement de réglage (21) est fixé au niveau d'un châssis de véhicule (2) du chariot de manutention (1) et est en liaison fonctionnelle avec le moyen de support (20) en vue de son actionnement entre la position relevée et la position abaissée.

10. Chariot de manutention selon l'une quelconque des revendications 1 à 9, **caractérisé en ce que** l'entraînement de réglage (21) est formé par un cylindre hydraulique (35), en particulier un cylindre hydraulique à double action.

11. Chariot de manutention selon l'une quelconque des revendications 1 à 10, **caractérisé en ce que** la structure de levage (4) est réalisée sous forme de structure de levage à plusieurs coups (4) avec un mât de support (4) disposé au niveau du châssis de véhicule (2) et un ou plusieurs mâts de sortie (4a ; 4b) déplaçables vers le haut.

12. Chariot de manutention selon l'une quelconque des revendications 1 à 11, **caractérisé en ce que** le poste de conduite (5) est disposé de manière relevable et abaissable au niveau de la structure de levage (4).

13. Chariot de manutention selon l'une quelconque des revendications 1 à 12, **caractérisé en ce que** le moyen de réception de charge (6) est disposé au niveau du poste de conduite (5), et est formé par une fourche de charge disposée dans la direction longitudinale du véhicule (L) ou par une fourche pivotante de poussée ou par une fourche télescopique disposée dans la direction transversale du véhicule (Q).
